# EUROPÄISCHE PATENTSCHRIFT

(11) **EP 0 739 650 B1**
(45) Veröffentlichungstag und Bekanntmachung des Hinweises auf die Patenterteilung: **18.08.1999**
(21) Anmeldenummer: 96104466.6
(22) Anmeldetag: 21.03.1996
(51) Int. Cl.: B01D 53/74

(54) **Evakuierungssystem mit Abgasreiningung und Betriebsverfahren hierfür**
Evacuating system with off-gas cleaning and process for operating it
Système d'évacuation avec purification de gaz d'échappement et procédé pour son opération

(30) Priorität: 25.04.1995 DE 19515145
(43) Veröffentlichungstag der Anmeldung: 30.10.1996
(73) Patentinhaber: EBARA Germany GmbH, 63452 Hanau am Main (DE)
(72) Erfinder: Hauff, Alfred, Dr., 63571 Gelnhausen (DE); Kinzig, Volker, 63571 Gelnhausen (DE)
(74) Vertreter: Zapfe, Hans, Dipl.-Ing.

(56) Entgegenhaltungen:
- EP-A- 0 061 074
- US-A- 3 786 130

## Beschreibung

Die Erfindung betrifft ein Evakuierungssystem mit Abgasreinigung nach dem Oberbegriff des Patentanspruchs 1.

Derartige Evakuierungssysteme sind bekannt. Sie werden beispielsweise in Verbindung mit Produktionsanlagen der Halbleiterindustrie verwendet, in denen eine ganze Reihe toxischer und reaktiver Gase eingesetzt werden. So werden beispielsweise bei chemischen Beschichtungsverfahren, sogenannten CVD-Prozessen, Gase wie bestimmte Siliziumwasserstoffe, Phosphorwasserstoffe, Borwasserstoffe, TEOS verwendet. Bei Trockenätzprozessen kann eine ganze Reihe von Fluor- und Chlorverbindungen engesetzt werden. Da die betreffenden Prozesse unter Vakuum durchgeführt werden, werden ständig Gase der vorstehend genannten Art abgesaugt. Da sie eine erhebliche Gefährdung der Umweit darstellen, müssen die Abgase der Vakuumpumpen gereinigt werden, wofür eine ganze Reihe von Abgasreinigungsverfahren und -systemen zur Verfügung stehen.

Als Vakuumpumpen kommen vorzugsweise ölgedichtete Drehschieberpumpen, trockenverdichtende Vakuumpumpen wie Klauenpumpen, Wälzkolbenpumpen, Schraubenkompressoren und dergleichen in Frage, denen gegebenenfalls auch noch andere Vakuumpumpen vorgeschaltet sein können, die in niedrigeren Druckbereichen arbeiten.

Es ist bekannt, hinter diesen Vakuumpumpen Abgasreinigungssysteme zu installieren, in denen folgende Reinigungsprozesse durchgeführt werden:
- Umwandeln der Gase in Salze, derart, daß die Gase in einen inerten Feststoff umgewandelt werden,
- Verbrennen und Auswaschen der Gase mit anschließender Neutralisation, so daß die ursprünglichen Gase in gelöste Feststoffe umgewandelt und entsorgt werden können,
- Adsorbieren der Gase in speziellen Adsorberbetten, die die Gase in ihrer Oberfläche binden und in Kanister oder Patronen eingeschlossen sind (z.B. Aktivkohle oder Zeolite).

Es ist auch bekannt, mehrere Produktionsanlagen für Halbleiterelemente an Sammelleitungen anzuschließen. Da die Produktionsprozesse in den einzelnen Produktionsanlagen nicht synchron verlaufen, werden in der Sammelleitung Gasgemische gebildet, deren Komponenten zum Teil miteinander reagieren und neue, teilweise schädliche Verbindungen bilden.

Beim Stand der Technik befinden sich jedoch zwischen den Vakuumpumpen oder Vakuum-Pumpsätzen und den Reinigungseinrichtungen lange Rohrleitungen, deren Länge 15 m und mehr betragen kann. Damit sind enorme Wärmeverluste verbunden, so daß die Rohrleitungen unter den Taupunkt der kondensationsfähigen Komponenten abkühlen. Dies hat den entscheidenden Nachteil, daß mindestens ein Teil der Gase in den betreffenden Leitungen kondensiert und zu einem späteren Zeitpunkt wieder sublimiert. Dies führt nicht nur zu erheblichen Wartungs- und Reinigungskosten, sondern auch zur Gefährdung der Mitarbeiter, die diese Arbeiten ausführen. Besonders gefährlich sind hierbei bestimmte Fluor-Verbindungen, die mit der Luftfeuchtigkeit unter Bildung von Flußsäure reagieren, die sich in flüssiger Form in den beschriebenen Leitungssystemen befinden. Bereits ein einziger Tropfen der Flußsäure kann zu erheblichen Verätzungen der Haut führen, dampf- und gasförmige Fluorverbindungen bilden eine erhebliche Gefahr für die Atmungsorgane.

Teilweise wurde die vorstehend beschriebene Kondensation von Schadstoffen in den Rohrleitungen billigend in Kauf genommen, weil damit eine nur scheinbare bessere Reinigungswirkung in den Abgas-Reinigungssystemen einherging.

Die Rohrleitungsreinigung stellt jedoch ein erhebliches Risiko dar für Umwelt, Personal und für die Anlagen, da nämlich die Kondensate teilweise zu Undichtigkeiten in den Flanschverbindungen und sogar zum Durchätzen von Rohrleitungen geführt haben. Weiterhin wurde eine Rückdiffusion von Abgasen in die Vakuumpumpen beobachtet, in denen beispielsweise der Trockenpumpprozeß erheblich gestört wurde.

Letztendlich benötigen die Vakuumpumpen einerseits und die Abgasreinigungssysteme andererseits jeweils eigene Aufstellflächen, wodurch die Investitionskosten derartiger Anlagen beträchtlich steigen, von Fällen einmal abgesehen, in denen zusätzliche Aufstellflächen an geeigneter Stelle nicht mehr zur Verfügung stehen. Dies führt im Grenzfall zu einer erheblichen Verlängerung der ohnehin schon störenden Leitungssysteme.

Durch die DE 43 14 942 A1 ist es bekannt, auf einem gemeinsamen Grundrahmen einen Abscheider und einen Saugventilator anzuordnen, wobei der Saugventilator dem Abscheider nachgeschaltet ist. Die bekannte Anlage ist für einen Vakuumbetrieb weder vorgesehen noch geeignet, weil durch den Saugventilator nur mäßige Unterdrücke erzeugt werden können. Bei der bekannten Reihenfolge von Abscheider und Saugventilator stellt sich nicht das Problem einer Verunreinigung der Verbindungsleitungen.

Durch die US-A-3 786 130 ist es bekannt, auf der Saugseite einer Vakuumpumpe eine Reinigungseinrichtung anzuordnen, die nach dem Prinzip der Chemisorption arbeitet und Kohlenwasserstoffe bindet. Von toxischen Stoffen ist nicht die Rede. Da die Chemisorption bei geringer Gasdichte unter Vakua bis hinunter zu 0.133 Pa (10⁻³ Torr) geschehen soll, ist eine extrem große Oberfläche des absorbierenden Materials erforderlich. Für bestimmte Stoffe ist eine Beheizung des absorbierenden Materials bis auf 200 °C vorgeschrieben, so daß die Vakuumpumpe durch die zusätzliche Kompressionswäme mit entsprechenden Temperaturen belastet wird. Dadurch wird die Schmierfähigkeit des Pumpenöls beeinträchtigt. Weder diese Wärme, noch die Kompressionswärme der Vakuumpumpe wird in Richtung der Reinigungseinrichtung weitergegeben, sondern entweicht auf der Druckseite der Vakuumpumpe an die Atmosphäre.

Für die Evakuierung von Produktionsanlagen der Halbleiterindustrie ist es weiterhin bekannt, ölgedichtete Pumpen wie Sperrschieber- und Wälzkolbenpumpen zu verwenden, bei denen die abgesaugten Gase mit dem Pumpenöl in Berührung kommen. Um die Schmierfähigkeit des Pumpenöls zu erhalten, dürfen die Pumpengehäuse keine Temperaturen oberhalb von etwa 75 °C annehmen, was durch eine Gehäusekühlung erreicht wird. Vakuumöle haben ein sehr kritisches Verhalten: Sie sind entweder Ein- oder Zweibereichsöle, aus denen im Vakuum keine leichtsiedenden Komponenten ausdampfen dürfen, was durch Temperaturbegrenzung vermieden werden muß.

Im Pumpenöl, das wegen seiner niedrigen Temperatur hierbei unfreiwillig die Funktion einer "Waschflüssigkeit" übernimmt, kondensiert ein Teil der Schadstoffe, so daß das Pumpenöl in Abständen ausgetauscht und entsorgt werden mußte. Ein weiterer Teil der Schadstoffe kondensiert in den Kanälen des Pumpengehäuses, so daß dieses im Laufe der Zeit, von der Druckseite ausgehend, "zuwächst". Ein wiederum weiterer Teil der Schadstoffe kondensiert in den langen Abgasleitungen, so daß die Wirkung der Vakuumpumpe gegenüber den Produktionsanlagen abnimmt und der teure Produktionsauschuß entsprechend zunimmt. Eine Verkürzung, Warmhaltung oder Erwärmung der Gas-Verbindungsleitung kann also nicht zum Erfolg führen.

Durch das "Instruction Manual 1995" der Anmelderin sind Trockenläuferpumpen mit mehreren Stufen und zwischengeschalteten Kondensatoren für die Schadstoffe bekannt. Bei derartigen Pumpen ist das Schmieröl für die thermisch und vakuumseitig abgeschirmten Lager von den Pumpenstufen oder Pumpenkammern getrennt, so daß die Gehäusetemperatur für die Pumpenstufen deutlich höhere Werte annehmen kann, die auch zwischen 180 und 200 °C liegen können. Das Lageröl kann nicht verseucht werden, und in den Pumpenstufen selbst kondensieren keine Schadstoffe. Das geförderte Gas wird den letzten drei Pumpenstufen entnommen und jeweils durch einen Gaskühler geschickt. Die Abgase werden zwischen den letzten Pumpenstufen derart abgekühlt, daß bestimmte Schadstoffe kondensieren konnten. Hierbei wird den Abgasen ein großer Teil der Kompressionswärme entzogen. Die von der Pumpe geförderten Gase werden nach jeder der letzten Stufen wieder unter Entzug von Kompressionswärme der jeweils vorausgegangenen Stufe in den Kondensationsbereich der Feststoffe abgekühlt

Wegen der endlichen Größe auch des letzten Gaskühlers werden aber nicht sämtliche Schadsstoffe restlos ausgeschieden. Vielmehr tritt ein dem Partialdruck und der Temperatur entsprechender Anteil der Schadstoffe auch noch aus der letzten Pumpenstufe und dem letzten Gaskühler aus und kondensiert bei weiterer Abkühlung auch noch in den nachgeschalteten Leitungen. Ein Teil der Schadstoffe kondensiert auch hierbei in den Kanälen des Pumpengehäuses, so daß dieses im Laufe der Zeit, von der Druckseite ausgehend, "zuwächst". Die Wirkung der Vakuumpumpe gegenüber den Produktionsanlagen nimmt ab, und der teure Produktionsauschuß nimmt entsprechend zu.

Durch die Firmendruckschrift "Vakuum-Pumpstände" der Leybold AG, Nr. 173.02.01, Katalog HV 300, Teil A7, Auflage 03/91, Seiten 10, 11, sind 2-stufige Pumpstände bekannt, bei denen hinter der Vorpumpe ein Auspuff-Filter, ggf. mit Ölrückführung zur Vorpumpe, angeordnet ist. Ein derartiger Filter würde jedoch nicht kondensierte toxische Stoffe an die Atmosphäre durchlassen und sich durch kondensierte toxische Stoffe allmählich zusetzen, so daß die Durchsatzmenge der Vakuumpumpe entsprechend abnimmt und der Gegendruck am Ausgang der Produktionsanlagen entsprechend ansteigt. Der Druck in Produktionsanlagen der Halbleiterindustrie ist jedoch eine extrem kritische Größe, so daß das Produktionsverfahren nach kurzer Zeit zum Erliegen kommt.

Die gleiche Druckschrift befaßt sich auf den Seiten 32/33 mit Pumpständen für die Halbleiter-Industrie, schildert die Abgasprobleme, ohne jedoch die erfindungsgemäße bauliche Vereinigung mit einer der eingangs genannten Reinigungseinrichtungen aus der Gruppe Adsorber, Verbrennungsöfen, Gaswäscher, Gasreaktoren und Neutralisatoren anzugeben; vielmehr wird auf einen modularen Aufbau solcher Pumpstände mit externen Filtersystemen des Typs RFS 40-65 hingewiesen. Filter zählen jedenfalls nicht zu den vorgenannten Reinigungseinrichtungen. Als "Komponenten" der Pumpstände sind Auspuff-Filter des Typs ARS und Chemie-Filter des Typs CFS 40-65 angegeben.

In einem Prospekt der Leybold AG mit der Überschrift "ARS Auspuff-Filter mit Schmiemittelrückführung" (Seite 1B. 17) ist angegeben, daß dieser Filter Schmiermittel aus der Abluft ausfiltert und daß das Schmiermittel gesammelt und und mengenabhägig automatisch wieder in den Schmiermittelkreislauf der Vakuum-Pumpe eingebracht wird. Es heißt: "Zur Sicherheit ist zusätzlich ein Überdruckventil eingebaut. Bei verstopftem bzw. verschmutztem Filterelement öffnet das Überdruckventil. Leichtflüchtige Stoffe und Aromastoffe können das Filter passieren. Je nach Beschaffenheit des abgepumpten Mediums empfiehlt es sich, zusätzlich eine Auspuffleitung anzuschließen; diese ist immer erforderlich, wenn die Abgase gefährlich sind". Über eine Behandlung dieser gefährlich Abgase schweigt sich diese Schrift aus.

In einem Prospekt der Leybold AG mit der Überschrift "CFS Chemie-Filter mit Sicherheits-Trennventil" (Seite 1B:16) ist angegeben, daß das CFS-Chemie-Filter in den Haupt-Schmiermittelstrom eingebaut ist. Es heißt weiterhin: "Sämtliches von der Ölpumpe gefördertes Öl passiert zunächst das Trennventil und dann die Filterelemente, von dort geht es wieder zurück durch das das Trennventil in die Vakuum-Pumpe". Weiter heißt es: "Die Filterlemente haben zur Begrenzung des Öldrucks ein eingebautes Überdruckventil, welches nach Erreichen des roten Bereichs öffnet." Über eine Behandlung gefährlicher Abgase schweigt sich auch diese Schrift aus.

Die bekannten Filter dienen also nur zum Schutze des Pumpenöls und damit der Pumpen selbst.

Der Erfindung liegt daher die Aufgabe zugrunde, ein Evakuierungssystem nach dem Oberbegriff des Patentanspruchs 1 anzugeben, bei dem die Kondensatbildung mit den beschriebenen Folgen unterbleibt, zumindest aber in ganz wesentlichem Maße eingeschränkt wird, und das eine deutlich verringerte Aufstellfläche benötigt.

Die Lösung der gestellten Aufgabe erfolgt erfindungsgemäß durch die Merkmale im Kennzeichen des Patentanspruchs 1.

Die Zusammenfassung der mindestens einen Vakuumpumpeinrichtung einerseits und der mindestens einen Reinigungseinrichtung andererseits zu einer Baueinheit führt zu einer extrem kompakten Bauweise, insbesondere aber zu einer erheblichen Verkürzung der zwischen der Vakuumpumpeinrichtung und der Reinigungseinrichtung angeordneten Gas-Verbindungsleitung.

Dadurch kann im Regelfall auf eine äußere Beheizung (positive Wärmezufuhr) der Gasverbindungsleitung und nachgeschalteter Leitungen und Ventile bis zur Reinigungseinrichtung verzichtet werden. Es ist jedoch zweckmäßig, diese Leitungen etc. mit einer thermischen Isolerumhüllung zu versehen, um die Wirkung der Gaserwärmung durch die Vakuumpumpeinrichtung zu unterstützen, so daß in jedem Falle eine Kondensation von Schadstoffen bzw. toxischen Stoffen so weit wie irgend möglich unterbunden wird.

Es ist dabei besonders vorteilhaft, wenn die Vakuumpumpeinrichtung und die Reinigungseinrichtung einen gemeinsamen Grundrahmen aufweisen.

Der Ausdruck "gemeinsamer Grundrahmen" besagt nicht notwendigerweise, daß es sich um einen einteiligen Grundrahmen handeln muß. Vielmehr ist es ohne weiteres möglich, den Grundrahmen aus kleineren Teilrahmen zusammenzusetzen. Dies steht nämlich in erheblichem Gegensatz zum Stande der Technik, bei dem einzelne Rahmen für die Vakuumpumpe einerseits und für die Reinigungseinrichtung andererseits völlig voneinander getrennt und an unterschiedlichen Standorten aufgestellt sind. Die Kantenlängen derartiger - waagrechter - Grundrahmen liegen vorzugsweise zwischen 400 bis 1200 cm x 450 bis 1300 cm.

Die extrem kurze Leitungsführung führt zu zwei Vorteilen, die sich wechselseitig unterstützen: Zum einen stehen nur extrem geringe Oberflächen für die Kondensation von Schadstoffen und geringe Volumina für die Ansammlung etwaiger flüssiger Kondensate zur Verfügung. Zum anderen bewirken die relativ hohen Gastemperaturen am Austritt der (letzten) Vakuumpumpe eine Aufheizung bzw. Warmhaltung der Gas-Verbindungsleitung auf Temperaturen, bei denen entweder keine oder nur eine vernachlässigbare Kondensation stattfindet. Diese Austrittstemperaturen liegen im allgemeinen zwischen 80 und 240 °C.

Der Ausdruck "im wesentlichen ohne äußere Wärmezufuhr" besagt, daß im Regelfall auf eine externe Beheizung der Gas-Verbindungsleitung verzichtet werden kann, dann nämlich, wenn die Taupunkte der kondensationsfähigen Komponenten entsprechend niedrig liegen und die Austrittstemperatur der Abgase aus den Pumpen über den Taupunkten liegt. Beim Einsatz von Pumpen mit niedrigen Austrittstemperaturen und/oder bei Gaskomponenten mit hohen Taupunkten kann es erforderlich sein, in geringem Umfange eine externe Beheizung der Gas-Verbindungsleitung von der Pumpe zur Reinigungseinrichtung anzuwenden.

Ein Vergleich möge dies erläutern: Bei einer 20 m langen Rohrleitung nach dem Stand der Technik, die wegen der Strömungswiderstände auch einen entsprechend großen Innenquerschnitt, eine große Wandstärke und eine große Oberfläche aufweist, müßte mittels eines Heizmantels eine enorme Heizleistung auf die Rohrleitung aufgebracht werden, wobei beim Anfahren auch das Masseproblem zu berücksichtigen ist (Kaltstart). Ohne externe Beheizung läßt sich der Taupunkt auf der gesamten Länge der Rohrleitung wegen des äußerst geringen Massestromes an Gasen überhaupt nicht überschreiten.

Beim Erfindungsgegenstand beträgt die maximale Länge der Gas-Verbindungsleitung etwa 2 m, also maximal etwa 10 %, und wegen des geringen Strömungswiderstandes können deren Innenquerschnitt, die Wandstärke und die Oberfläche deutlich kleiner gehalten werden, so daß das Masseproblem beim Kaltstart eine untergeordnete Rolle spielt. Eine eventuelle Dauer-Heizleistung könnte also gegenüber dem Stande der Technik auf weniger als 10 % reduziert werden, wenn sie überhaupt benötigt wird. Die Aufheizung beim Kaltstart durch Abgase ist in wesentlich kürzerer Zeit möglich, und sie kann durch kurzzeitiges Pumpen von komprimierter Luft bewirkt werden, was beim Stande der Technik schon gar nicht möglich ist.

Der beim Erfindungsgegenstand mögliche, kleinere Leitungsquerschnitt ermöglicht auch eine höhere Strömungsgeschwindigkeit, wodurch der statische Druck relativ ansteigt und die Kondensationsgefahr der Schadstoffe zusätzlich abnimmt.

Es handelt sich hierbei um einen synergistischen Effekt: Die aus der Vakuumpumpeinrichtung austretenden heißen Abgase gelangen auf kürzestmöglichem Wege. in kürzester Zeit und mit sehr hoher Temperatur in die Reinigungseinrichtung. Beim Kaltstart kann das Kondensationsrisiko dadurch ausgeschaltet werden, daß man die Gas-Verbindungsleitung mit Luft auf die gewünschte Temperatur bringt und erst danach die Abgase mit den Schadstoffen in die Gas-Verbindungsleitung einleitet.

Die Aufstellfläche ist nicht oder zumindest nicht wesentlich größer als die Stellfläche der herkömmlichen Vakuumpumpen, und dadurch ist es möglich, das erfindungsgemäße Evakuierungssystem auf einer Stellfläche abzustellen, die bisher nur für das Aufstellen einer Vakuumpumpe oder eines Satzes von Vakuumpumpen geeignet war.

Es ist dabei von zusätzlichem Vorteil, wenn der gemeinsame Grundrahmen in an sich bekannter Weise als Fahrgestell ausgebildet ist. Hierdurch ist es möglich, im Falle einer Störung oder einer Inspektion nicht nur die Vakuumpumpe, sondern auch gemeinsam mit ihr die Reinigungseinrichtung von der zugeordneten Produktionsanlage zu trennen und durch ein Austauschaggregat zu ersetzen, das sich durch die gleiche Bauweise und die gleichen Vorteile auszeichnet.

Es ist dabei im Zuge einer weiteren Ausgestaltung der Erfindung besonders vorteilhaft, wenn die Vakuumpumpe und die Reinigungseinrichtung innerhalb eines imaginären Quaders angeordnet sind, dessen waagrechter Querschnitt durch den Außenumfang des Grundrahmens bestimmt ist. Hierdurch ist es möglich, den Grundrahmen durch senkrechte Stützen und waagrechte Streben zu einem Träger von Gehäusewänden zu ergänzen, so daß das gesamte Aggregat in einer vollständig geschlossenen Bauweise ausgeführt werden kann.

Es ist dabei weiterhin von Vorteil, wenn über der mindestens einen Vakuumpumpe ein zentrales Steuergerät für die Vakuumpumpe und für die Reinigungseinrichtung angeordnet ist. In besonders vorteilhafter Weise gehört zu dem Steuergerät auch ein Anzeigegerät für mindestens einen Teil der Betriebsparameter von Vakuumpumpe und Reinigungseinrichtung, wobei dieses Steuergerät zusätzlich auch noch Steuerelemente für weitere Funktionen enthalten kann, wie beispielsweise für die Spülung der Vakuumpumpe mit einem Inertgas.

Es ist dabei von besonderem Vorteil, wenn die Vakuumpumpeinrichtung - gegebenenfalls als letzte Stufe - eine dreiflügelige Trockenläufer-Pumpe aufweist, die in einem Druckbereich zwischen 10⁻² mbar und 1100 mbar arbeitet.

Eine solche - an sich bekannte - dreiflügelige Trockenläufer-Pumpe hat folgende Eigenschaften und Vorteile:
1. Hohe Austrittstemperaturen der Gase und
2. geringe Druckpulsation.

Die erfindungsgemäße Verwendung einer solchen Pumpe führt durch ihre Integration in die Baueinheit mit der Reinigungseinrichtung zu den bereits genannten Vorteilen und fördert außerdem das Betriebsverfahren der infrage kommenden Reinigungseinrichtungen, insbesondere dann, wenn es sich um Verbrennungsöfen handelt, die mit einer Flamme arbeiten.

Außerdem kann auf den Einsatz von Auspuff-Schalldämpfern verzichtet werden. Dies hat den zusätzlichen Vorteil, daß der Abgasweg nicht durch den Schalldämpfer und dessen innere Oberflächen vergrößert werden muß. Der Energieverlust ist also geringer, und eine Reinigungsstelle mit Gefahrenpotential entfällt, denn ein Schalldämpfer wäre eine Einrichtung, in der bevorzugt Kondensationen von Schadstoffen stattfinden würden.

Dies ist besonders dann der Fall, wenn - in Strömungsrichtung der Abgase gesehen - der dreiflügeligen Trockenläufer-Pumpe als erste Stufe eine Rootspumpe vorgeschaltet ist, die in einem Druckbereich zwischen 10⁻³ mbar und 10 mbar arbeitet.

Es ist weiterhin von Vorteil, wenn in der Gas-Verbindungsleitung ein Umschaltventil angeordnet ist, durch das die Abgase wahlweise dem Verbrennungsofen und der Abgasleitung zuführbar sind. Hierdurch wird es ermöglicht, die Anlage bei einem Austausch der Reinigungseinrichtung weiter zu betreiben.

Die Reinigungseinrichtung kann dabei in vorteilhafter Weise aus mindestens einem Gerät aus der Gruppe Adsorber, Verbrennungsöfen, Gaswäscher, Gasreaktoren und Neutralisatoren bestehen.

Die Erfindung betrifft auch ein Betriebsverfahren für das vorstehend beschriebene Evakuierungssystem. Zur Lösung der gleichen Aufgabe ist dabei vorgesehen, daß die Reinigungseinrichtung mit einer Eintrittstemperatur der fluiden Medien von mindestens 80 °C, vorzugsweise von mindestens 160 °C, betrieben wird.

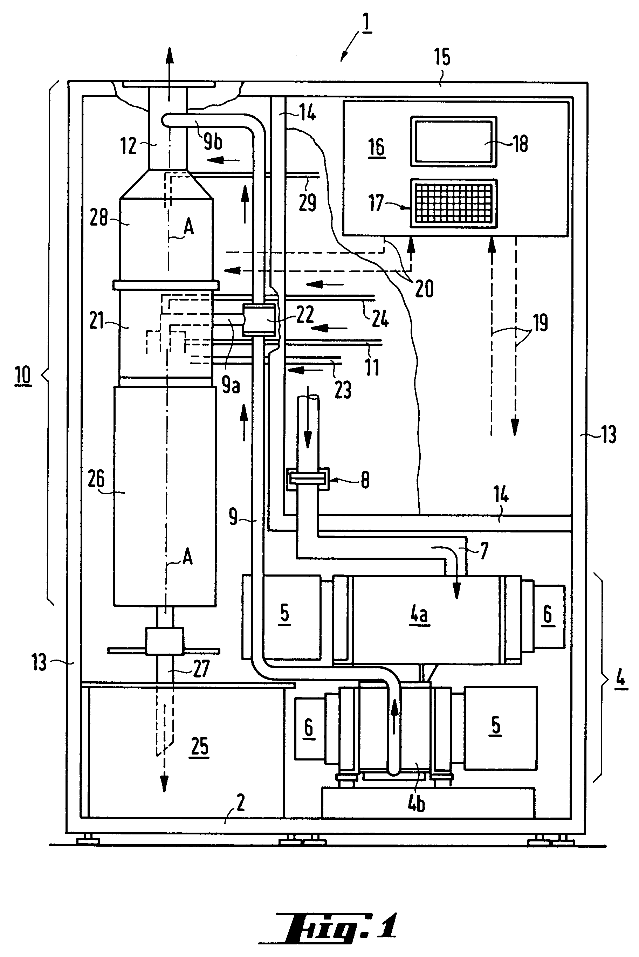

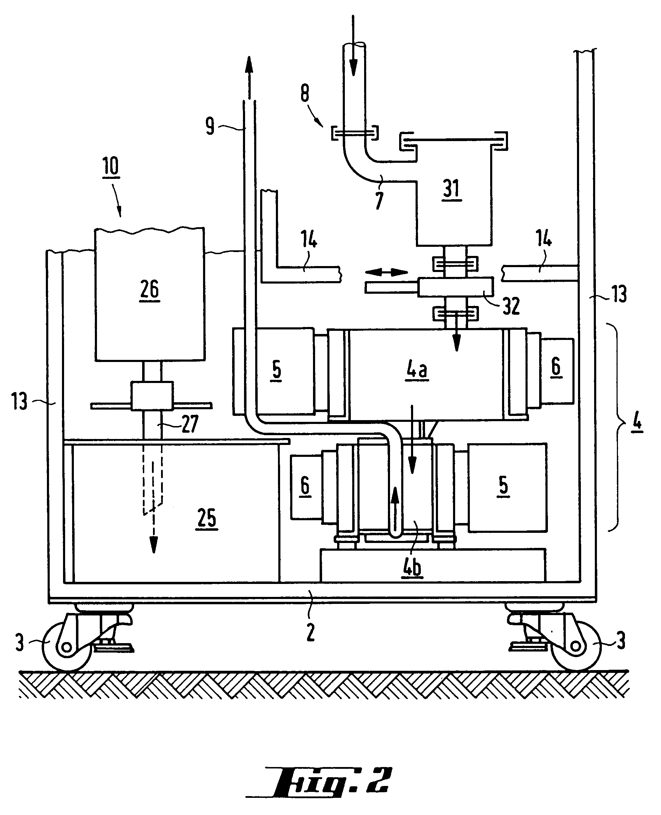

Zwei Ausführungsbeispiele des Erfindungsgegenstandes werden nachfolgend anhand der Figuren 1 und 2 näher erläutert.

Es zeigen:
- Figur 1: eine teilweise aufgebrochene Frontalansicht eines vollständigen Evakuierungssystems, und
- Figur 2: den unteren Teil einer Variante des Gegenstandes nach Figur 1.

In Figur 1 ist ein Evakuierungssystem 1 dargestellt, bei dem auf einem rechteckigen, waagrechten Grundrahmen 2, eine Vakuumpumpeinrichtung 4 befestigt ist, die aus einer Reihenanordnung einer Rootspumpe 4a und einer dreiflügeligen Trockenläufer-Pumpe 4b besteht. Der Antrieb erfolgt über je einen Elektromotor 5 und ein Stirnradgetriebe 6, die integrale Bauteile der Vakuumpumpen 4a und 4b sind.

Die Vakuumpumpeinrichtung 4 besitzt eine Ansaugleitung 7, die über eine Leitungskupplung 8 an eine hier nicht gezeigte Produktionsanlage für Halbleiterbauelemente angeschlossen ist. Die Druckseite der Vakuumpumpeinrichtung 4 ist über eine Gas-Verbindungsleitung 9 an eine Reinigungseinrichtung 10 angeschlossen, die im vorliegenden Fall als Verbrennungsofen mit einem Brenner ausgestattet ist und eine senkrechte Hauptachse A-A besitzt. Die Bauweise einer solchen Reinigungseinrichtung wird weiter unten erläutert, so daß die vorstehend angegebenen inneren Konstruktionsdetails nur angedeutet sind. Das Brenngas wird über eine Leitung 11 zugeführt, und die gereinigten und den gesetzlichen Vorschriften der TA-Luft genügenden Abgase werden durch eine Abgasleitung 12 entweder sofort oder über eine hier nicht gezeigte Sammelleitung an die Atmosphäre abgegeben. ("TA-Luft" im Englischen "TLV=Threshold-Level-Value" for air).

Der Grundrahmen 2 ist durch vier Stützen 13, einen Mittelrahmen 14 und einen Oberrahmen 15 zu einer Tragkonstruktion ergänzt, die zumindest in ihrem Bereich zwischen dem Grundrahmen 2 und dem Mittelrahmen 14 durch hier nicht gezeigte Wandelemente verschlossen werden kann. Es ist zu erkennen, daß die Vakuumpumpeinrichtung 4 und die Reinigungseinrichtung 10 innerhalb eines imaginären Quaders angeordnet sind, dessen waagrechter Querschnitt durch den Außenumfang des Grundrahmens 2 und durch die senkrechten Stützen 13 bestimmt wird.

Die Reinigungseinrichtung 10 besitzt einen Verbrennungsofen 21, in den die Gas-Zuführungsleitung 9 über ein Umschaltventil 22 und einen Leitungsabschnitt 9a einmündet. Das Brenngas wird über die Leitung 11 zugeführt. Eine Leitung 23 dient zur Zufuhr von Verbrennungsluft mit einer solchen Menge, daß die Verbrennung unter Sauerstoff-Überschuß abläuft. Über eine weitere Leitung 24 wird eine Waschflüssigkeit, beispielsweise Kalilauge (KOH), zugeführt und mittels einer nicht näher gezeigten Kegeldüse in Form eines Kegels versprüht. Die Waschflüssigkeit wird über einen Sammelbehälter 25 im Kreislauf geführt.

Nach unten hin schließt sich an den Verbrennungsofen 21 eine Reaktionskammer 26 an, in der die Verbrennungsgase weiterhin mit der Waschflüssigkeit umgesetzt werden. Die Waschflüssigkeit wird schließlich über ein Fallrohr 27 in den Sammelbehälter 25 zurückgeführt.

Die Verbrennungsgase strömen schließlich nach oben und werden durch ein Aerosolfilter 28 geleitet, in den eine weitere Leitung 29 für die Zufuhr der Waschflüssigkeit aus dem Sammelbehälter 25 mündet. Auch an deren Ende befindet sich eine nicht näher bezeichnete Kegeldüse.

Vom Umschaltventil 22 führt ein weiterer Leitungsabschnitt 9b in die Abgasleitung 12. Beim Normalbetrieb der Vorrichtung ist der Leitungsabschnitt 9b abgesperrt. Lediglich für kurze Zeitspannen, in denen der Verbrennungsofen 21 und/oder die Reaktionskammer 26 ausgetauscht oder gereinigt werden, können die Abgase direkt der Abgasleitung 12 zugeführt werden.

Figur 2 zeigt, daß das gesamte Evakuierungssystem auch mit Fahrrollen 3 versehen sein kann, um einen Ortswechsel zu erleichtern. Weiterhin sind innerhalb der Baueinheit zwischen der Leitungskupplung 8 und der Saugseite der Vakuumpumpeinrichtung 4 ein Filter 31 und ein Absperrventil 32 angeordnet. Letzteres hat den Vorteil, daß die Reinigungseinrichtung ausgetauscht und/oder gewartet werden kann, während die Vakuumpumpeinrichtung läuft, so daß diese auf Temperatur gehalten wird, bis eine neue Inbetriebnahme erfolgt. Dadurch ist die Vorrichtung sofort wieder voll betriebsbereit, und Kondensationen von Schadstoffen innerhalb der Vakuumpumpeinrichtung werden vermieden. Das Absperrventil 32 wird vom eingebauten Steuergerät 16 betätigt, so daß auf eine externe Ansteuerung und die Verdrahtung verzichtet werden kann.

Die gesamte Baueinheit ist vollkommen gekapselt, so daß keine nennenswerte Verschmutzung mehr möglich ist.

Über dem Mittelrahmen 14 ist ein zentrales Steuergerät 16 angeordnet, das eine Eingabetastatur 17 und eine Anzeigeeinrichtung 18 aufweist. Das Steuergerät 16 ist über eine Vielzahl von Daten- und Steuerleitungen 19 mit der Vakuumpumpeinrichtung 4 und/oder zugehörigen Stellgliedern verbunden. Die beiden eingezeichneten Leitungen 19 stehen stellvertretend für sämtliche Leitungen. Über das zentrale Steuergerät 16 und die Leitungen 19 ist es beispielsweise möglich, Steuerbefehle für einen Motorschalter, Spülgasventile und Kühlwasserventile zu übertragen. Umgekehrt werden die Stellungssignale über die Leitungen 19 an das Steuergerät 15 gemeldet und erforderlichenfalls auf der Anzeigeeinrichtung 18 zur Anzeige gebracht.

Weiterhin steht das zentrale Steuergerät 16 über eine Vielzahl von Daten-und Steuerleitungen 20, von denen stellvertretend gleichfalls nur zwei Leitungen dargestellt sind, mit der Reinigungseinrichtung 10 in Verbindung. Über die Leitungen 20 lassen sich beispielsweise Druck und Temperatur der Gase in der Gas-Verbindungsleitung 9 zum Steuergerät 16 übertragen, desgleichen Signale einer Flammenüberwachung, einer Temperaturüberwachung, eines Wasserdurchflußwächters und einer Gewichtsmeßeinrichtung, wenn beispielsweise das Gewicht einer Adsorberpatrone gemessen wird, durch das die Erschöpfung der Adsorberpatrone angezeigt wird. In umgekehrter Richtung lassen sich vom Steuergerät 16 Stellsignale für eine Wasserströmung, für einen Heizstromschalter und für eine evtl. vorhandene By-Pass-Leitung zur Reinigungseinrichtung 10 übertragen. Daraus ergibt sich, daß sowohl die Meßdaten als auch die Stellsignale der einzelnen Stellglieder der Reinigungseinrichtung 10 in der Anzeigeeinrichtung 18 dargestellt werden können. Stellbefehle, Sollwerte etc. können über die Eingabetastatur 17 in das Steuergerät 16 eingegeben werden.

Es ist Figur 1 zu entnehmen, daß durch die enge räumliche Zuordnung von Vakuumpumpeinrichtung 4 einerseits und Reinigungseinrichtung 10 andererseits ein einziges Steuergerät für beide Einrichtungen verwendet werden kann, das gleichfalls keinen zusätzlichen Stellplatz erfordert, sondern oberhalb der Vakuumpumpeinrichtung 4 angeordnet werden kann. Dadurch entsteht ein außerordentlich kompaktes Evakuierungssystem, das äußerst kurzfristig gegen ein Ersatzsystem ausgetauscht werden kann. Die Bedienungsperson hat sämtliche Daten des Pumpsystems einerseits und der Reinigungseinrichtung andererseits im Blickfeld, so daß Kontrollwege zwischen getrennten Steuergeräten vermieden werden, alternativ aber auch die Verlegung entsprechend langer Steuer- und Datenleitungen, die erforderlich wären, wenn die beschriebenen Einrichtungen an unterschiedlichen Stellplätzen aufgestellt würden. Erforderlichenfalls kann das zentrale Steuergerät 16 auch noch durch einen Schreiber oder Drucker ergänzt werden, um eine Dokumentation über die Betriebsparameter anfertigen zu können.

## Patentansprüche

1. Evakuierungssystem (1) mit Abgasreinigung für die Reinigung von Abgasen aus Produktionsanlagen der Halbleiterindustrie mit oberhalb der Raumtemperatur kondensationsfähigen Komponenten, mit mindestens einer Vakuumpumpeinrichtung (4) für die Erzeugung einer Druckdifferenz mit mindestens dem Faktor 5 zwischen einer Ansaugleitung (7) und einer Gas-Verbindungsleitung (9) und mit mindestens einer dieser nachgeschalteten Reinigungseinrichtung (10) mit mindestens einem Gerät aus der Gruppe Adsorber, Verbrennungsöfen, Gaswäscher, Gasreaktoren und Neutralisatoren für die von der Vakuumpumpeinrichtung (4) gelieferten fluiden Medien,
**dadurch gekennzeichnet**, daß
a) die mindestens eine Vakuumpumpeinrichtung (4) eine Trockenläuferpumpe (4b) enthält oder aus dieser besteht, deren Druckseite an die Reinigungseinrichtung (10) angeschlossen ist,
b) daß die Vakuumpumpeinrichtung (4) mit der mindestens einen Reinigungseinrichtung (10) innerhalb eines gemeinsamen Standorts zu einer kompakten Baueinheit zusammengefaßt ist und daß
c) die Gas-Verbindungsleitung (9) innerhalb der Baueinheit verläuft und auf eine Länge begrenzt ist, bei der die Gas-Verbindungsleitung (9) zumindest im wesentlichen ohne äußere Wärmezufuhr durch die Kompressionswärme der Trockenläuferpumpe (4b) auf einer Temperatur haltbar ist, die oberhalb der Kondensationstemperatur der kondensationsfähigen Komponenten liegt.

2. Evakuierungssystem nach Anspruch 1, **dadurch gekennzeichnet**, daß die Vakuumpeinrichtung (4) und und die Reinigungseinrichtung (10) einen gemeinsamen oder aus Teilrahmen bestehenden Grundrahmen (2) aufweisen.

3. Evakuierungssystem nach Anspruch 2, **dadurch gekennzeichnet**, daß der gemeinsame Grundrahmen (2) als Fahrgestell mit Fahrrollen (3) ausgebildet ist.

4. Evakuierungssystem nach Anspruch 1, **dadurch gekennzeichnet**, daß die Vakuumpumpeinrichtung (4) und die Reinigungseinrichtung (10) innerhalb eines imaginären Quaders angeordnet sind, dessen waagrechter Querschnitt durch den Außenumfang des Grundrahmens (2) bestimmt ist.

5. Evakuierungssystem nach Anspruch 1, **dadurch gekennzeichnet**, daß über der mindestens einen Vakuumpumpeinrichtung (4) ein zentrales Steuergerät (16) für die Vakuumpumpeinrichtung (4) und für die Reinigungseinrichtung (10) angeordnet ist.

6. Evakuierungssystem nach Anspruch 5, **dadurch gekennzeichnet**, über der mindestens einen Vakuumpumpe (4) eine Anzeigeeinrichtung (18) für mindestens einen Teil der Betriebsparameter von Vakuumpumpeinrichtung (4) und Reinigungseinrichtung (10) angeordnet ist.

7. Evakuierungssystem nach Anspruch 1, **dadurch gekennzeichnet**, daß die Trockläuferpumpe (4b) dreiflügelig augeführt ist und in einem Druckbereich zwischen 10⁻² mbar und 1100 mbar arbeitet.

8. Evakuierungssystem nach Anspruch 7, **dadurch gekennzeichnet**, daß - in Strömungsrichtung der Abgase gesehen - der dreiflügeligen Trockenläufer-Pumpe (4b) als erste Stufe eine Rootspumpe (4a) vorgeschaltet ist, die in einem Druckbereich zwischen 10⁻³ mbar und 10 mbar arbeitet.

9. Evakuierungssystem nach Anspruch 2, **dadurch gekennzeichnet**, daß die Reinigungseinrichtung (10) mit senkrechter Hauptachse (A-A) über dem Grundrahmen (2) angeordnet ist.

10. Evakuierungssystem nach Anspruch 9, **dadurch gekennzeichnet**, daß die Reinigungseinrichtung (10) einen Verbrennungsofen (21) mit einer Zuführungsleitung (9a) für das zu reinigende Abgas, einer Brenngaszuführungsleitung (11), einer Luftzuführungsleitung (23) und mit einer Zuführungsleitung (24) für eine Waschflüssigkeit aufweist, und daß unter dem Verbrennungsofen (21) eine Reaktionskammer (26) für die Kontaktierung von Verbrennungsgasen und Waschflüssigkeit angeordnet ist.

11. Evakuierungssystem nach Anspruch 10, **dadurch gekennzeichnet**, daß unterhalb der Reaktionskammer (26) neben der Vakuumpumpeinrichtung (4) ein Sammelbehälter (25) für die in einem Kreislauf geführte Waschflüssigkeit angeordnet ist.

12. Evakuierungssystem nach Anspruch 10, **dadurch gekennzeichnet**, daß in der Gas-Verbindungsleitung (9) ein Umschaltventil (22) angeordnet ist, durch das die Abgase wahlweise dem Verbrennungsofen (21) und der Abgasleitung (12) zuführbar sind.

13. Evakuierungssystem nach Anspruch 5, **dadurch gekennzeichnet**, daß innerhalb der Baueinheit auf der Saugseite der Vakuumpumpeinrichtung (4) ein Absperrventil (48) angeordnet ist, das von dem eingebauten Steuergerät (16) betätigbar ist.

14. Betriebsverfahren für ein Evakuierungssystem (1) nach Anspruch 1, **dadurch gekennzeichnet**, daß die Reinigungseinrichtung (10) mit einer Eintrittstemperatur der fluiden Medien von mindestens 80°C, vorzugsweise von mindestens 160°C, betrieben wird.

## Claims

1. Evacuation system (1) with waste gas purification for purification of waste gases of production plants of the semi-conductor industry with components condensable above room temperature, with at least one vacuum pump device (4) for producing a pressure difference of at least Factor 5 between a vacuum pipe (7) and a gas connecting pipe (9) and downstream thereof at least one purification device (10) with at least one device of the group adsorber, combustion furnace, gas washer, gas reactors and neutralisers for fluid media delivered by the vacuum pump device (4), **characterised in that**
a) the at least one vacuum pump device (4) either includes a dry operation pump (4b) or consists of the latter, the pressure side of which is connected to the purification device (10);
b) the at least one vacuum pump device (4) is combined with the at least one purification device (10) into a compact assembly unit within a common location; and
c) the gas connection pipe (9) extends within the assembly unit and is defined to a length at which the gas connecting pipe (9) can be held at least substantially without external heat delivery by the compression heat of the dry operation pump (4b) at a temperature above condensation temperature of condensable components.

2. Evacuation system according to Claim 1, **characterised in that** the vacuum pump device (4) and the purification device (10) have a common base frame (2) or one composed of frame elements.

3. Evacuation system according to Claim 2, **characterised in that** the common base frame (2) is designed as a chassis with drive rollers (3).

4. Evacuation system according to Claim 1, **characterised in that** the vacuum pump device (4) and the purification device (10) are arranged within an imaginary square the horizontal cross-section of which is determined by the outer periphery of the base frame (2).

5. Evacuation system according to Claim 1, **characterised in that** above the at least one vacuum pump device (4) is arranged a central control device (16) for the vacuum pump device (4) and for the purification device (10).

6. Evacuation system according to Claim 5, **characterised in that** above the at least one vacuum pump (4) is arranged a display (18) for at least a part of the operating parameters of vacuum pump device (4) and purification device (10).

7. Evacuation system according to Claim 1, **characterised in that** the dry operation pump (4b) is of triple bladed design and operates in a pressure range between 10⁻² mbar and 1,100 mbar.

8. Evacuation system according to Claim 7, **characterised in that** a Roots pump (4a), which operates in a pressure range between 10⁻³ and 10 mbar, is connected as a first stage upstream of the triple bladed dry operation pump (4b), as seen in the flow direction of the waste gases.

9. Evacuation system according to Claim 2, **characterised in that** the purification device (10) is arranged with perpendicular main axis (A-A) above the base frame (2).

10. Evacuation system according to Claim 9, **characterised in that** the purification device (10) includes a combustion furnace (21) with a delivery pipe (9a) for waste gas to be purified, a combustion gas delivery pipe (11), an air delivery pipe (23) and a delivery pipe (24) for a washing fluid, and below the combustion furnace (21) is arranged a reaction chamber (26) for contact of combustion gases and washing fluid.

11. Evacuation system according to Claim 10, **characterised in that** below the reaction chamber (26) alongside the vacuum pump device (4) is arranged a collecting vessel (25) for washing liquid in circulation.

12. Evacuation system according to Claim 10, **characterised in that** in the gas connection pipe (9) is arranged a switchover valve (22) by means of which waste gases are selectably deliverable to the combustion furnace (21) and the waste gas pipe (12).

13. Evacuation system according to Claim 5, **characterised in that** within the assembly unit on the suction side of the vacuum pump device (4) is arranged a shutoff valve (48) which is operable by the built in control device (16).

14. Operating process for an evacuation system (1) according to Claim 1, **characterised in that** the purification device (10) is operated with an entry temperature of fluid media of at least 80°C, preferably of at least 160°C.

## Revendications

1. Système d'évacuation (1) avec purification pour la purification de gaz d'échappement provenant d'installations de production de l'industrie des semi-conducteurs et contenant des composantes susceptibles de condensation au-dessus de la température ambiante, avec au moins une unité de pompe à vide (4) pour la production d'une différence de pression d'un facteur au moins égal à 5 entre une conduite d'aspiration (7) et une conduite de liaison à gaz (9) et au moins une unité de purification (10) en aval à celle-ci qui comprend au moins un appareil choisi parmi le groupe comprenant : adsorbeur, four de combustion, laveur à gaz, réacteur à gaz et neutralisateur, pour les milieux fluides fournis par l'unité de pompe à vide,
caractérisé en ce que
a) ladite au moins une unité de pompe à vide (4) contient une pompe à éléments mobiles à sec (4b), ou bien est constituée par une telle pompe, dont le côté refoulement est raccordé à l'unité de purification (10),
b) ladite unité de pompe à vide (4) est regroupée avec ladite au moins une unité de purification (10) à l'intérieur d'un emplacement commun pour former une unité structurelle compacte, et
c) la conduite de liaison à gaz (9) s'étend à l'intérieur de l'unité structurelle et est limitée à une longueur pour laquelle la conduite de liaison à gaz (9) peut être maintenue, au moins sensiblement sans apport thermique extérieur, par la chaleur de compression de la pompe à rotor sec (4b), à une température située au-dessus de la température de condensation des composantes susceptibles de condensation.

2. Système d'évacuation selon la revendication 1, caractérisé en ce que l'unité de pompe à vide (4) et l'unité de purification (10) comportent un châssis de base (2) commun, ou bien constitué de châssis partiels.

3. Système d'évacuation selon la revendication 2, caractérisé en ce que le châssis de base commun (2) est réalisé sous forme de châssis à déplacement avec des galets de roulement (3).

4. Système d'évacuation selon la revendication 1, caractérisé en ce que l'unité de pompe à vide (4) et l'unité de purification (10) sont agencées à l'intérieur d'un parallélépipède imaginaire dont la section horizontale est déterminée par la périphérie extérieure du châssis de base (2).

5. Système d'évacuation selon la revendication 1, caractérisé en ce qu'au-dessus de ladite au moins une unité de pompe à vide (4) est agencé un dispositif de commande centrale (16) pour l'unité de pompe à vide (4) et pour l'unité de purification (10).

6. Système d'évacuation selon la revendication 5, caractérisé en ce qu'au-dessus de ladite au moins une unité de pompe à vide (4) est agencé un dispositif d'affichage (18) pour au moins une partie des paramètres de fonctionnement de l'unité de pompe à vide (4) et de l'unité de purification (10).

7. Système d'évacuation selon la revendication 1, caractérisé en ce que la pompe à rotor sec (4b) est réalisée avec trois pales, et fonctionne dans une plage de pression comprise entre 10⁻² mbar et 1100 mbar.

8. Système d'évacuation selon la revendication 7, caractérisé en ce que, vue dans la direction d'écoulement des gaz d'échappement, la pompe à trois pales (4b) est branchée à titre de premier étage d'une pompe de Roots (4a), laquelle fonctionne dans une plage de pression comprise entre 10⁻³ mbar et 10 mbar.

9. Système d'évacuation selon la revendication 2, caractérisé en ce que l'unité de purification (10) est agencée au-dessus du châssis de base (2) de sorte que son axe principal (A-A) soit vertical.

10. Système d'évacuation selon la revendication 9, caractérisé en ce que l'unité de purification (10) comprend un four de combustion (21) avec une conduite d'admission (9a) pour les gaz d'échappement à purifier, avec une conduite d'admission de gaz de combustion (11), avec une conduite d'admission d'air (23), et avec une conduite d'admission (24) pour un liquide de lavage, et en ce qu'il est prévu une chambre de réaction (26) agencée au-dessous du four de combustion (21), pour la mise en contact des gaz de combustion et du liquide de lavage.

11. Système d'évacuation selon la revendication 10, caractérisé en ce qu'il est prévu un réservoir de collecte (25) pour le liquide de lavage mené en circuit fermé, agencé au-dessous de la chambre de réaction (26) à côté de l'unité de pompe à vide (4).

12. Système d'évacuation selon la revendication 10, caractérisé en ce qu'il est prévu une soupape de commutation (22) agencée dans la conduite de liaison à gaz (9), au moyen de laquelle les gaz d'échappement peuvent être amenés au choix au four de combustion (21) et à la conduite de gaz d'échappement (12).

13. Système d'évacuation selon la revendication 5, caractérisé en ce qu'à l'intérieur de l'unité structurelle et du côté aspiration de l'unité de pompe à vide (4) est agencée une soupape d'isolement (48), laquelle peut être actionnée par le dispositif de commande intégré (16).

14. Procédé de fonctionnement pour un système d'évacuation (1) selon la revendication 1, caractérisé en ce que l'unité de purification (10) est mise en fonctionnement avec une température d'entrée du milieu fluide égale à au moins 80°C, de préférence au moins 160°C.
